# EUROPÄISCHE PATENTSCHRIFT

(11) **EP 4 127 847 B1**
(45) Veröffentlichungstag und Bekanntmachung des Hinweises auf die Patenterteilung: **20.08.2025**
(21) Anmeldenummer: 21712995.6
(22) Anmeldetag: 16.03.2021
(51) Int. Cl.: G05B 23/02, F16K 37/00

(54) **ADAPTER FÜR DRAHTLOSE DATENÜBERTRAGUNG**
ADAPTER FOR WIRELESS DATA TRANSMISSION
ADAPTATEUR POUR LA TRANSMISSION DE DONNÉES SANS FIL

(30) Priorität: 24.03.2020 DE 102020108075
(43) Veröffentlichungstag der Anmeldung: 08.02.2023
(73) Patentinhaber: Samson Aktiengesellschaft, 60314 Frankfurt am Main (DE)
(72) Erfinder: YOUSIF, Leonard, 65189 Wiesbaden (DE); DÜRR, Melanie, 60389 Frankfurt am Main (DE); KLEIN, Andreas, 61130 Nidderau (DE); MELLINGER, Christian, 63179 Obertshausen (DE)
(74) Vertreter: Köllner, Malte
(86) Internationale Anmeldenummer: PCT/EP2021/056684
(87) Internationale Veröffentlichungsnummer: WO 2021/191000

(56) Entgegenhaltungen:
- CN-A- 107 449 466
- US-A1- 2002 180 615
- US-A1- 2007 293 152
- US-A1- 2019 114 891
- SAMSON AG: "Translation of original instructions EB 8493 EN TROVIS3793 Smart Positioner (HART", 30 March 2018 (2018-03-30), pages 1 - 152, XP055836300, Retrieved from the Internet <URL:www.samsongroup.com> [retrieved on 20210831]

## Beschreibung

### Gebiet der Erfindung

Die Erfindung betrifft das Gebiet der Prozessanlagen, in denen der Durchfluss von Prozessmedien mithilfe von Stellventilen gesteuert wird. Diese Stellventile enthalten elektronisch gesteuerte Ventilstellungsregler. Der Betriebszustand dieser Ventilstellungsregler muss regelmäßig überwacht werden. Dies kann entweder durch optische Inspektion oder mithilfe von Datenübertragung erfolgen. Die Erfindung betrifft in diesem Zusammenhang insbesondere einen Ventilstellungsregler, der einen Adapter zur drahtlosen Datenübertragung aufweist.

### Stand der Technik

In zunehmendem Maße spielt in Prozessanlagen das drahtlose Auslesen von Zustandsdaten von Feldgeräten eine Rolle.

Die Druckschrift EP 1 647 751 B1 beschreibt einen Ventilstellungsregler, der ein Modul für eine drahtlose Verbindung zu einem externen Auslesegerät aufweist. Die drahtlose Verbindung zwischen dem Ventilstellungsregler und dem Auslesegerät kann durch die Ausstattung des Stellantriebs mit einem Radiofrequenz-Transceiver, wie z.B. Bluetooth oder WIFI, hergestellt werden. An jedem drahtlosen Kommunikationsort oder Knoten wird ein eindeutiger Identifikationscode bereitgestellt, der nur für diesen Knoten gilt, so dass jedes Risiko von Störungen oder falscher Befehlsübertragung vermieden wird.

Die Druckschrift WO 2019/070534 A1 beschreibt ein Feldgerät mit einer Netzwerkbrücke, die erste Daten, die an einem ersten Bluetooth Low Energy (BLE)-Funkgerät der Netzwerkbrücke über ein BLE-Netzwerk von einem zweiten BLE-Funkgerät eines entfernten Geräts empfangen und gemäß einem BLE-Kommunikationsprotokoll formatiert sind, in zweite Daten konvertiert, die gemäß einem industriellen Kommunikationsprotokoll formatiert sind.

Keines der beschriebenen drahtlosen Verbindungsmodule ist nachrüstbar.

Aus der Veröffentlichung "Translation of original instructions EB 8493 EN TROVIS 3793 Smart Positioner (HART)" der Samson AG ist ein Ventilstellungsregler bekannt, der eine Einrichtung zur Betriebszustandsüberwachung mit einer Betriebszustandsanzeige aufweist, wobei im Gehäuse des Ventilstellungsreglers eine Fensteröffnung vorhanden ist, durch welche die Betriebszustandsanzeige sichtbar ist. Eine Schnittstelle (HART) zur Ausgabe von Daten über den Betriebszustand ist ebenfalls vorhanden. Ein Modul für eine drahtlose Verbindung ist dabei nicht beschrieben.

### Aufgabe

Aufgabe der Erfindung ist es, einen Ventilstellungsregler mit einem Adapter für die drahtlose Datenübertragung anzugeben, der die Nachteile des Standes der Technik vermeidet.

### Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht. Die Verwendung der Einzahl soll die Mehrzahl nicht ausschließen, was auch im umgekehrten Sinn zu gelten hat, soweit nichts Gegenteiliges offenbart ist.

Zur Lösung der Aufgabe wird ein Ventilstellungsregler gemäß dem Gegenstand des Anspruchs 1 vorgeschlagen.

Dadurch, dass der Adapter für die drahtlose Datenübertragung flach ausgestaltet ist, kann er in Ventilstellungsregler nachgerüstet werden.

Dadurch wird es möglich, gängige Ventilstellungsregler, die bisher keine Möglichkeit zur drahtlosen Übertragung ihrer Zustandsdaten haben, mit diesem Adapter nachzurüsten. Dadurch erreichen auch diese gängigen Ventilstellungsregler die Fähigkeit der drahtlosen Übertragung ihrer Zustandsdaten.

Die Möglichkeit der Nachrüstung wird dann noch stärker ausgebaut, wenn der Radius des zylindrischen Gehäuses mindestens dreimal so groß ist wie dessen Höhe.

Um den Adapter in dem Fenster des Gehäuses eines Ventilstellungsreglers kraftschlüssig festklemmen zu können, ist es vorteilhaft, wenn das zylindrische Gehäuse des Adapters eine Mehrzahl von nach außen vorspringenden Zähnen aufweist, mit denen der Adapter in das Fenster passt.

Eine besonders einfache Konstruktion und Herstellung ergibt sich, wenn der Prozessor auf einer Leiterplatte montiert ist und die Leiterplatte auf der mit dem Prozessor bestückten Seite mit einem Polyamid-Klebstoff vergossen ist. Die vergossene Leiterplatte bildet dann das Gehäuse.

Alternativ oder kumulativ zu den Zähnen kann das Gehäuse einen umlaufenden Bund aufweisen. Wird das Gehäuse in das Fenster eingeschoben, kann es mit dem umlaufenden Bund bündig anschlagen und damit positioniert werden.

Um den Betriebszustand des Ventilstellungsreglers nicht nur drahtlos übertragen zu können, sondern weiterhin auch anzuzeigen, kann das zylindrische Gehäuse auf der vom Prozessor abgewandten Seite eine optische Signalisierungseinrichtung aufweisen.

Die optische Signalisierungseinrichtung kann auf verschiedenen Technologien basieren, zum Beispiel auf Flüssigkristallen und / oder elektronischem Papier und / oder Leuchtdioden.

Gängig ist es, den Betriebszustand mithilfe von zwei Leuchtdioden unterschiedlicher Farbe anzuzeigen.

Hierfür werden typischerweise eine rote und eine grüne Leuchtdiode eingesetzt.

Die am Prozessor vorhandene Datenschnittstelle kann über ein flexibles Kabel, ein Flachkabel oder ein Flachleiterkabel mit einem am Ende des Kabels anhängenden elektrischen Steckverbinder verbunden sein. Durch ein solches flexibles Kabel lässt sich das Gehäuse des Ventilstellungsreglers öffnen, ohne den Adapter zu verschieben oder die Datenverbindung zwischen Ventilstellungsregler und Adapter zu trennen.

Alternativ oder kumulativ zu einer Kabelverbindung kann die Datenschnittstelle auch als Infrarot-Schnittstelle ausgeführt sein.

In aller Regel wird der Prozessor mithilfe der Sende-Empfangseinrichtung Daten nach einem der folgenden Standards aussenden:
- ZigBee und / oder
- Wireless Highway Addressable Remote Transducer (HART) und / oder
- WiFi und / oder
- Bluetooth und / oder
- Bluetooth Low Energy, insbesondere nach dem IEEE 802.15.4 Standard.

Um an Verkehrsgewohnheiten anzuknüpfen, weist der Prozessor des Adapters Steuerungsroutinen auf, die derart ausgebildet sind, dass sie Informationen über den Betriebszustand des Ventilstellungsreglers mit Hilfe der roten und grünen Leuchtdiode gemäß den Vorgaben der NAMUR Codes anzeigen.

Die Aufgabe wird ferner gelöst durch eine Prozessanlage mit mindestens einem Ventil mit dem weiter oben beschriebenen Ventilstellungsregler mit einem Adapter zur drahtlosen Datenübertragung.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Ein Ausführungsbeispiel ist in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: den Zusammenbau aus BLE Adapter und dem Gehäusedeckel des Ventilstellungsreglers in einer perspektivischen Ansicht mit Blick von außen auf die Fensteröffnung;
- Fig. 2: den Zusammenbau aus BLE Adapter und Ventilstellungsregler;
- Fig. 3: den BLE Adapter isoliert in perspektivischer Ansicht mit Flachkabel und Steckverbinder für den Anschluss an die SSP (SAMSON Serial Protocol) Buchse des Stellungsreglers; und
- Fig. 4: das Gehäuse des BLE Adapters mit Einbauten in einer Teilschnittansicht.

### Fig. 1

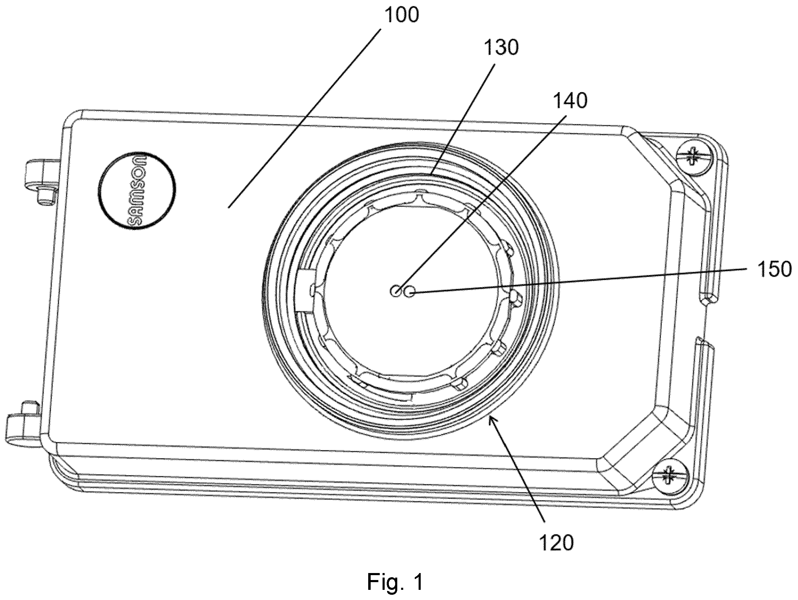

Fig. 1 zeigt den Zusammenbau aus BLE Adapter und dem Gehäusedeckel 100 des Ventilstellungsreglers in einer perspektivischen Ansicht mit Blick von außen auf die Fensteröffnung 120. Durch die transparente Scheibe 130 hindurch sind die rote LED 140, die grüne LED 150 und eine eventuell erläuternde Beschriftung oder Abbildung auf der Sichtseite des BLE Adapters zu erkennen.

Da der Einbau ohne ein Entfernen der transparenten Scheibe 130 bewerkstelligt werden kann, kann eine für das Gehäuse des Ventilstellungsreglers bestehende IP-Schutz-Qualifizierung bewahrt werden. Andernfalls ginge mit dem Entfernen der transparenten Scheibe 130 der IP-Schutz verloren und müsste durch einen geeigneten Umbau und Neu-Zertifizierung durch eine Fachperson mit ausreichender Qualifikation wiederhergestellt werden.

### Fig. 2

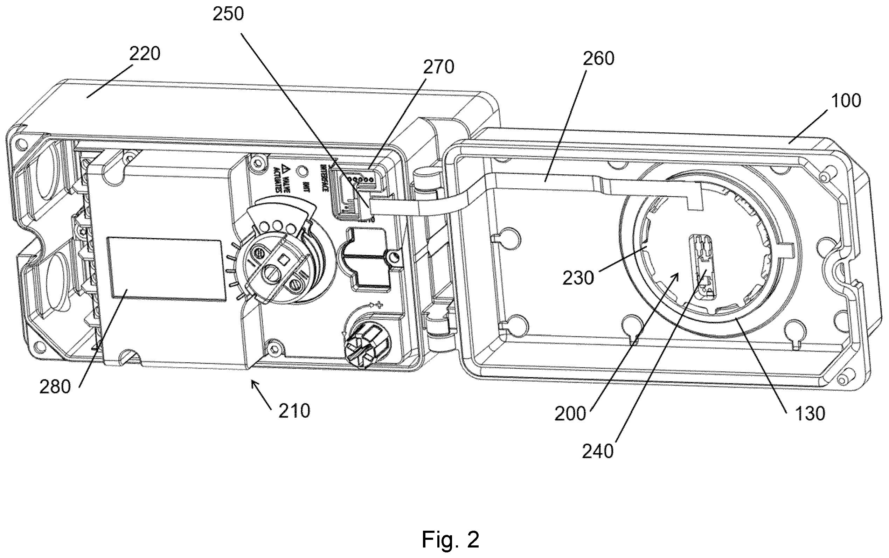

Fig. 2 zeigt den Zusammenbau aus BLE Adapter 200 und Ventilstellungsregler (VSR) 210, wobei das VSR-Gehäuse aufgeklappt gezeigt ist. Durch die aufgeklappte Darstellung ergibt sich ein perspektivischer Blick auf die Innenseite des Ventilstellungsreglers 210. Das Gehäuse des Ventilstellungsreglers besteht aus einem Grundkörper 220 und einem Deckel 100.

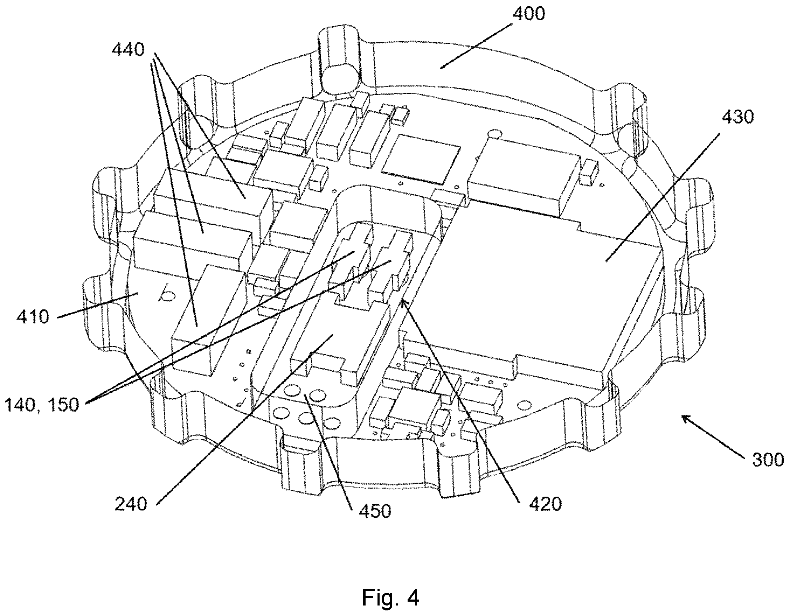

Der BLE-Adapter 200 ist von der Innenseite des Gehäuses aus in die zylindrische, rückseitige Vertiefung des Sichtfensters 120 eingedrückt und wird von den Zähnen 230 klemmend reibschlüssig gehalten. In dieser Einbaulage weisen die LEDs 140, 150 des BLE-Adapters 200 zur transparenten Scheibe 130 und sind von der Außenseite des Gehäuses sichtbar. Der vom Spritzguss (siehe unten) ausgesparte mittlere Bereich der Leiterplatte PCB (*printed circuit board*) 410 (siehe Fig. 4) erlaubt den Zugang zum Mikroschalter 240 für das Pairing mit einem Mobilgerät, insbesondere einschließlich der dafür nötigen Authentifizierung. Der Mikroschalter 240 muss von der ablesenden Person händisch betätigt werden, weshalb der Stellungsregler nicht von außerhalb des Werksgeländes ausgelesen werden kann.

Der Steckverbinder 250 am Flachleiter-Flachkabel (FFC) 260 ist in die SSP (SAMSON Serial Protocol) Buchse 270 des Stellungsreglers 210 eingesetzt. Von dort entnimmt der BLE-Adapter 200 die erforderliche elektrische Energie für den Betrieb. Das FFC 260 kann stellenweise auf die Innenseite des Gehäusedeckels 100 aufgeklebt werden, um ein Knicken oder Falten beim Schließen des Gehäuses zu vermeiden.

### Fig. 3

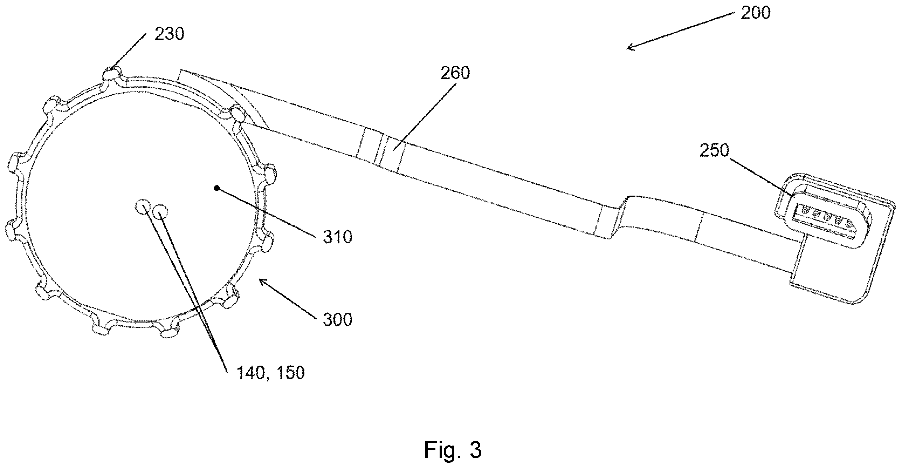

Der BLE-Adapter 200 gemäß Fig. 3 umfasst ein Gehäuse 300 und ein daran anhängendes Flachleiter-Flachkabel (FFC) 260, d.h. eine flache Parallelanordnung aus flachen Leitern. Am Ende des FFC 260 findet sich ein abgewinkelter Steckverbinder 250.

Das Gehäuse 300 ist im wesentlichen zylinder- bzw. scheibenförmig. Es besteht aus schwarzem Polyamid (siehe unten). An seinem Umfang befinden sich die Zähne 230. Der äußerste Umfang des Gehäuses 300 einschließlich der Zähne 230 ist so gewählt, dass das Gehäuse mit seinen Zähnen gerade in die zylindrische, rückseitige Vertiefung des Sichtfensters 120 passt und dort kraftschlüssig klemmt. Zwischen dem kleineren Umfang des Gehäuses 300 im zylinderförmigen Teil und dem größeren Umfang des Gehäuses 300 einschließlich Zähnen 230 und der zylindrischen, rückseitigen Vertiefung des Sichtfensters 120 verbleibt zwischen jeweils 2 Zähnen ein Luftspalt, durch den Feuchtigkeit aus dem Sichtfenster 120 abziehen kann, sodass es zu keiner Kondensation von Feuchtigkeit im Sichtfenster 120 kommt. Die lateralen Zähne 230 des Gehäuses 300 dienen zu dessen Ausrichtung und Fixierung in der runden Bohrung des Fensters 120 und erlauben zugleich eine Belüftung des Spalts zwischen der transparenten Scheibe 130 und dem Gehäuse 300 des BLE Adapters 200.

Die Sichtseite 310 des Gehäuses lässt 2 Bohrungen erkennen, durch die die rote und grüne LED 140, 150 hindurch scheinen können, die auf der Bestückungsseite des PCB 410 (siehe unten) montiert sind.

### Fig. 4

Fig. 4 zeigt das Gehäuse 300 des BLE-Adapters 200 mit Einbauten in einer Teilschnittansicht, in der die Kunststoffmasse bis auf die prismatischen Randflächen 400 unsichtbar gemacht ist. Die Perspektive verläuft leicht schräg von oben auf die Sichtseite 310, d.h. auf die Seite mit den LEDs 140, 150.

Das Gehäuse 300 wird durch teilweises Hinterspritzen einer starren, mehrlagigen Leiterplatte (PCB, *printed circuit board*) 410 mit einem verträglichen Kunststoffmaterial im Niederdruckverfahren von der Bestückungsseite her erzeugt. Konkret wird Makromelt^{®} OM 641, ein Polyamid-Klebstoff des Unternehmens Henkel, Düsseldorf, verwendet. Im Vergleich zu den meisten Vergussmaterialien ist die Festigkeit des ausgehärteten Makromelt^{®} ausreichend für die gewünschte mechanische Stabilität der äußeren Flächen des Gehäuses 300.

Das Hinterspritzen erzeugt das Gehäuse 300 mit stoffschlüssiger Abdeckung der Bauteile auf der Bestückungsseite des PCB 410 in einem Schritt. Die Rückseite der Bestückungsseite ist die Sichtseite 310 des Gehäuses 300.

Nach dem Hinterspritzen bleibt auf der Bestückungsseite des PCB 410 ein rechteckiger mittlerer Bereich 420 frei. Dort sind auf der Bestückungsseite ein Mikroschalter 240, eine Kontaktierung 450 und zwei LEDs 140, 150 angeordnet. Der Mikroschalter 240 ist zur Bestückungsseite hin ausgerichtet, um von dort bedient zu werden. Die Kontaktierung ist gleichfalls zur Bestückungsseite ausgerichtet und erlaubt den elektrischen Zugang zum PCB 410 für Prüfzwecke und zur Initialisierung. Vorliegend sind Kontakte 450 zur Stromversorgung und für den Zugang zu einer seriellen asynchronen Schnittstelle (UART) vorgesehen.

Die LEDs 140, 150 sind ebenfalls auf der Bestückungsseite des PCB 410 angeordnet, strahlen aber in Richtung der Sichtseite 310 des Gehäuses 300 des BLE Adapters. Dazu weist das PCB 410 zwei Öffnungen zur unbestückten Rückseite hin auf.

Weiterhin bleibt nach dem Spritzgießen des Gehäuses 300 die der Bestückungsseite gegenüberliegende Rückseite des PCB 410 komplett frei. Diese wird nachfolgend bis auf die Öffnungen für die LEDs 140, 150 durch eine Schutzfolie abgedeckt. Damit bildet die Schutzfolie die sichtbare Oberfläche auf der Sichtseite 310 des BLE Adapters 200 und kann mit aufgedruckten Erläuterungen und/oder Piktogrammen zur Bedeutung der LED-Anzeige versehen sein.

Unter dem Kunststoffmaterial liegt auf der Bestückungsseite des PCB 410 ein "off-theshelf" BLE Modul 430 (z.B. FANSTEL BC832 "Micro BLE 5.0 Module for Wearable loTs"), das einen Prozessor-Transceiver (Nordic Semiconductor nRF52832) mit einer geeigneten Antenne und diverser Beschaltung autonom betriebsfähig zusammenfasst.

Die weitere abgedeckte Ausrüstung auf der Bestückungsseite des PCB 410 betrifft Treiber für die LEDs 140, 150 sowie Schaltungen zur Signalpegelanpassung und zur Stabilisierung der Versorgungsspannung in Phasen einer erhöhten Stromaufnahme durch das BLE Modul 430. Vergleichsweise viel Platz nehmen die Back-up Kondensatoren 440 auf der linken Seite ein.

Das Gehäuse 300 mit dem teilweise eingebetteten PCB 410 ist für den Außenbereich (Ex-Bereich) konzipiert. Es handelt sich um eine Ex i, d.h. Zündschutzart "eigensicher", engl. *"intrinsic safety",* zertifizierte Schaltung und Gehäusekonfiguration. Dadurch kann der Kundendiensttechniker auch im Ex-Bereich, z.B. Zone 1, ohne Feuerschein eine Kommunikation mit einem mobilen Ex-zertifizierten Endgerät aufbauen und Daten aus dem Stellungsregler auslesen.

Als alternativer Aufbau ist vorgesehen, dass das Gehäuse des BLE-Moduls abweichend geformt sein kann, um in Ersatz des transparenten Fensters in die Öffnung des Deckels des Ventilstellungsreglers eingesetzt zu werden. In diesem Fall wird das Gehäuse des BLE-Adapters insbesondere einen umlaufenden Bund aufweisen, der von außen auf der Fensterdichtung anliegt, um die Abdichtfunktion der transparenten Scheibe zu übernehmen. Wegen deren Wegfalls wäre zudem eine ausreichend robuste Auslegung des Gehäuses des BLE-Adapters an der Sichtseite erforderlich.

### NAMUR-Empfehlung für Statusanzeige

Die folgende Tab. 1 zeigt die NAMUR-Empfehlung für eine Statusanzeige mit Rot-Grün-LEDs. NAMUR definiert einen Minimalstandard zur Anzeige des Gerätezustands bei Feldgeräten mittels zwei digital unabhängig schaltbaren LED Farbindikatoren in Rot und Grün. Die Anzeige mit einer gelben LED ist zur Einhaltung der Spezifikation nicht notwendig.

**Tab. 1**

| Statussignal | LED | alternative LED |
|---|---|---|
| Ausfall | rot | |
| Funktionskontrolle | rot blinkend | |
| Außerhalb der Spezifikation | rot blinkend | |
| Wartungsbedarf | grün blinkend | blau |
| Versorgung und ordnungsgemäßer Betrieb* | grün | |
| Schaltkontakt* | gelb | |

| | | |
|---|---|---|
| *kein Statussignal, nur zusätzliche Geräteinformation für Geräte mit binärem Ausgang | | |

Da der BLE-Adapter 200 wegen der Einbausituation die LCD-Anzeige 280 des Stellungsreglers 210 überdeckt (siehe Fig. 2), entfällt dessen Funktion für den Zweck einer Kontrolle des Geräts durch das Betriebspersonal. Durch die zwei LEDs 140, 150 auf der Sichtseite 310 des BLE-Adapters 200 wird der von NAMUR empfohlene Mindeststandard hinsichtlich einer Anzeige für Kontrollzwecke eingehalten.

Allerdings kann wegen der eigensicheren Auslegung des BLE-Adapters 200 bei dessen Verwendung mit einem eigensicher ausgelegten Ventilstellungsregler 210 dessen Gehäuse auch während des Betriebs unter Spannung geöffnet werden, um Zugang zu dem Display 280 zu erhalten.

### Glossar

### BLE

BLE steht für "Bluetooth Low Energy", eine gängige Spezifikation für drahtlose Daten-Übertragung. BLE ist eine Funktechnik, mit der sich Geräte in einer Umgebung von etwa 10 Metern vernetzen lassen. Geräte nach dem BLE-Standards senden in einem Frequenz-Band zwischen 2,402 GHz und 2,480 GHz. Im Vergleich zum "klassischen" Bluetooth soll BLE deutlich geringeren Stromverbrauch und geringere Kosten mit einem ähnlichen Kommunikationsbereich haben.

### IP Schutzklassen

Bezüglich ihrer Eignung für verschiedene Umgebungsbedingungen werden elektrische Betriebsmittel mit geeigneten Schutzarten, ausgedrückt mit IP-Codes, ausgeführt. Die Abkürzung IP steht für *International Protection.* Für die IP-Codes gibt es verschiedene deutsche und internationale Normen.

Die Schutzart ist von der elektrischen Schutzklasse zu unterscheiden. Während die Schutzart den Schutz aktiver Teile gegen Berührung, Eindringen von Fremdkörpern und Wasser sowie die Stoßfestigkeit definieren (sog. Gehäuseschutz), beschreibt die Schutzklasse Maßnahmen gegen gefährliche Spannungen an berührbaren, betriebsmäßig nicht unter Spannung stehenden leitfähigen Teilen von Betriebsmitteln.

### NAMUR-Empfehlung

Die NAMUR - Interessengemeinschaft Automatisierungstechnik der Prozessindustrie - ist ein internationaler Verband der Anwender von Automatisierungstechnik der Prozessindustrie, der am 3. November 1949 gegründet wurde. Der ursprüngliche volle Name "Normenarbeitsgemeinschaft für Mess- und Regeltechnik in der chemischen Industrie", aus dem sich das Akronym "NAMUR" ergibt, wird heute nicht mehr verwendet. Die NAMUR unterstützt den Erfahrungsaustausch der Mitglieder untereinander sowie mit anderen Vereinigungen und Verbänden.

Die Arbeitsergebnisse werden in Form von NAMUR-Empfehlungen und -Arbeitsblättern publiziert sowie ggf. bei den nationalen und internationalen Normungsgremien als Normungsvorschlag eingebracht. Es sind Erfahrungsberichte und Arbeitsunterlagen, die die NAMUR für ihre Mitglieder aus dem Kreis der Anwender zur fakultativen Benutzung erarbeitet hat. Sie werden von vielen Firmen weltweit angewendet.

NAMUR-Empfehlungen (NE) stellen eine Erläuterung des Standes der Technik und der Vorschriften sowohl für die Mitgliedsfirmen als auch für Hersteller, Wissenschaftler und Behörden dar. NAMUR-Arbeitsblätter (NA) sind eine Hilfestellung in Form von Checklisten und Anleitungen für die praktische Arbeit in den Firmen. Es gibt aktuell ca. 115 gültige NEs und NAs.

### Bezugszeichen

- 100: Gehäusedeckel
- 120: Fensteröffnung
- 130: transparente Scheibe
- 140: rote LED
- 150: grüne LED
- 200: BLE-Adapter
- 210: Ventilstellungsregler (VSR)
- 220: Grundkörper
- 230: Zähnen
- 240: Mikroschalter
- 250: Steckverbinder
- 260: Flachleiter-Flachkabel (FFC)
- 270: SSP (SAMSON Serial Protocol) Buchse
- 280: LCD-Anzeige
- 300: Gehäuse
- 310: Sichtseite
- 400: prismatische Randflächen
- 410: Leiterplatte (PCB, printed circuit board)
- 420: rechteckiger mittlerer Bereich
- 430: BLE-Modul
- 440: Back-up Kondensatoren
- 450: Kontaktierung

### zitierte Literatur

zitierte Patentliteratur
EP 1 647 751 B1
WO 2019/070534 A1
zitierte Nicht-Patentliteratur
IEEE 802.15.4
Samson AG: "Translation of original instructions EB 8493 EN TROVIS 3793 Smart Positioner (HART)", 30. März 2018 (2018-03-30), S. 1-152, XP055836300

## Patentansprüche

1. Ventilstellungsregler (210) mit:
1.1 einem Gehäuse (100) mit einer Fensteröffnung (120);
1.2 einer Einrichtung zur Betriebszustandsüberwachung;
1.3 einer innerhalb des Gehäuses (100) hinter der Fensteröffnung (120) angeordneten Betriebszustandsanzeige (280) der Einrichtung zur Betriebszustandsüberwachung;
1.4 mit einer Schnittstelle (270) zur Ausgabe von Daten über den Betriebszustand; wobei der Ventilstellungsregler (210) durch die folgenden Merkmale gekennzeichnet ist:
1.5 einen Adapter (200) für drahtlose Datenübertragung, insbesondere nach dem "Bluetooth Low Energy" Standard, wobei der Adapter (200) Folgendes aufweist:
1.5.1 ein zylindrisches Gehäuse (300), dessen Radius mindestens doppelt und höchstens zehnmal so groß ist wie dessen Höhe;
1.5.2 eine drahtlose Sende-Empfangseinrichtung;
1.5.3 einen Prozessor, der in dem zylindrischen Gehäuse angeordnet ist und mit der drahtlosen Sende-Empfangseinrichtung verbunden ist; und
1.5.4 eine Datenschnittstelle, die mit dem Prozessor verbunden ist;
1.5.5 wobei der Prozessor zum Ansteuern der Sende-Empfangseinrichtung und der Datenschnittstelle eingerichtet ist und mit deren Hilfe Daten drahtlos übertragen kann;
wobei
1.5.6 das zylindrische Gehäuse (300) auf einer vom Prozessor abgewandten Seite eine optische Signalisierungseinrichtung (140, 150) aufweist:
1.6.1 wobei der Adapter (200) mit der Schnittstelle (270) verbunden ist, um über die Schnittstelle Daten über den Betriebszustand zu empfangen und um in Reaktion auf den Empfang dieser Daten die optische Signalisierungseinrichtung zur Abgabe eines vorgegebenen optischen Signals anzusteuern; und
1.6.2 wobei der Adapter (200) zwischen der Betriebszustandsanzeige (280) und der Fensteröffnung (120) positioniert ist in einer Lage, die eine Inspektion der Signalisierungseinrichtung durch die Fensteröffnung (120) erlaubt.

2. Ventilstellungsregler (210) nach dem vorhergehenden Anspruch,
**dadurch gekennzeichnet,**
**dass** der Radius des zylindrischen Gehäuses (300) des Adapters (200) mindestens dreimal so groß ist wie dessen Höhe.

3. Ventilstellungsregler (210) nach einem der vorhergehenden Ansprüche,
**dadurch gekennzeichnet,**
**dass** das zylindrische Gehäuse (300) des Adapters (200) eine Mehrzahl von nach außen vorspringenden Zähnen (230) aufweist.

4. Ventilstellungsregler (210) nach einem der vorhergehenden Ansprüche,
**dadurch gekennzeichnet,**
**dass** der Prozessor des Adapters (200) auf einer Leiterplatte (410) montiert ist;
**dass** die Leiterplatte auf der mit dem Prozessor bestückten Seite mit einem Polyamid-Klebstoff vergossen ist; und
**dass** die vergossene Leiterplatte (410) das Gehäuse (300) des Adapters (200) bildet.

5. Ventilstellungsregler (210) nach einem der vorhergehenden Ansprüche,
**dadurch gekennzeichnet,**
**dass** das Gehäuse (300) des Adapters (200) einen umlaufenden Bund aufweist.

6. Ventilstellungsregler (210) nach einem der vorhergehenden Ansprüche,
**dadurch gekennzeichnet,**
**dass** die optische Signalisierungseinrichtung auf Flüssigkristallen und / oder elektronischem Papier und / oder Leuchtdioden basiert.

7. Ventilstellungsregler (210) nach dem unmittelbar vorhergehenden Anspruch,
**dadurch gekennzeichnet,**
**dass** die optische Signalisierungseinrichtung zwei Leuchtdioden (140, 150) unterschiedlicher Farbe aufweist.

8. Ventilstellungsregler (210) nach dem unmittelbar vorhergehenden Anspruch,
**dadurch gekennzeichnet,**
**dass** die optische Signalisierungseinrichtung eine rote (140) und eine grüne (150) Leuchtdiode aufweist.

9. Ventilstellungsregler (210) nach dem unmittelbar vorhergehenden Anspruch,
**gekennzeichnet durch**
eine Steuerung, die derart ausgebildet ist, dass sie Informationen über den Betriebszustand des Ventilstellungsreglers (210) mit Hilfe der roten (140) und grünen (150) Leuchtdiode gemäß den Vorgaben der NAMUR Codes anzeigt.

10. Ventilstellungsregler (210) nach dem unmittelbar vorhergehenden Anspruch,
**dadurch gekennzeichnet,**
**dass** Informationen über den Betriebszustand des Ventilstellungsreglers (210) mit Hilfe der roten (140) und grünen (150) Leuchtdiode in der folgenden Form angezeigt werden:
| Statussignal | LED |
|---|---|
| Ausfall | rot |
| Funktionskontrolle | rot blinkend |
| Außerhalb der Spezifikation | rot blinkend |
| Wartungsbedarf | grün blinkend |
| ordnungsgemäßer Betrieb | grün |

11. Prozessanlage mit mindestens einem Ventil mit einem Ventilstellungsregler nach einem der Ansprüche 1 bis 10.

## Claims

1. Valve positioner (210) comprising:
1.1 a housing (100) which has a window opening (120);
1.2 an operating status monitoring device;
1.3 an operating status display (280) of the operating status monitoring device, which is arranged within the housing (100) behind the window opening (120);
1.4 an interface (270) for outputting data about the operating status; wherein the valve positioner (210) is **characterized by** the following features:
1.5 an adapter (200) for wireless data transmission, in particular according to the "Bluetooth Low Energy" standard, wherein the adapter (200) comprises the following:
1.5.1 a cylindrical housing (300), the radius of which is at least twice and at most ten times its height;
1.5.2 a wireless transceiver;
1.5.3 a processor which is arranged in the cylindrical housing and connected to the wireless transceiver; and
1.5.4 a data interface which is connected to the processor;
1.5.5 wherein the processor is designed to control the transceiver and the data interface and can use them to wirelessly transmit data;
wherein
1.5.6 the cylindrical housing (300) has an optical signaling device (140, 150) on a side facing away from the processor;
1.6.1 wherein the adapter (200) is connected to the interface (270) in order to receive data about the operating status via the interface and, in response to the receipt of these data, to control the optical signaling device to emit a predetermined optical signal; and
1.6.2 wherein the adapter (200) is positioned between the operating status display (280) and the window opening (120) in a position which allows the signaling device to be inspected through the window opening (120).

2. Valve positioner (210) according to the preceding claim,
**characterized in that**
the radius of the cylindrical housing (300) of the adapter (200) is at least three times its height.

3. Valve positioner (210) according to either of the preceding claims,
**characterized in that**
the cylindrical housing (300) of the adapter (200) has a plurality of outwardly projecting teeth (230).

4. Valve positioner (210) according to any of the preceding claims,
**characterized in that**
the processor of the adapter (200) is mounted on a printed circuit board (410);
**in that** the printed circuit board is potted with a polyamide adhesive on the side equipped with the processor; **and**
**in that** the potted printed circuit board (410) forms the housing (300) of the adapter (200).

5. Valve positioner (210) according to any of the preceding claims,
**characterized in that**
the housing (300) of the adapter (200) has a circumferential collar.

6. Valve positioner (210) according to any of the preceding claims,
**characterized in that**
the optical signaling device is based on liquid crystals and/or electronic paper and/or light-emitting diodes.

7. Valve positioner (210) according to the immediately preceding claim,
**characterized in that**
the optical signaling device has two light-emitting diodes (140, 150) of different colors.

8. Valve positioner (210) according to the immediately preceding claim,
**characterized in that**
the optical signaling device has a red (140) and a green (150) light-emitting diode.

9. Valve positioner (210) according to the immediately preceding claim, **characterized by**
a control unit which is designed such that it displays information about the operating status of the valve positioner (210) using the red (140) and the green (150) light-emitting diode in accordance with the specifications of the NAMUR codes.

10. Valve positioner (210) according to the immediately preceding claim, **characterized in that**
information about the operating status of the valve positioner (210) is displayed using the red (140) and the green (150) light-emitting diode in the following form:
| Status signal | LED |
|---|---|
| failure | red |
| function check | flashing red |
| out of specification | flashing red |
| maintenance required | flashing green |
| proper operation | green |

11. Process plant comprising at least one valve which has a valve positioner according to any of claims 1 to 10.

## Revendications

1. Régulateur de position de soupape (210), comportant :
1.1 un boîtier (100) comportant une ouverture formant fenêtre (120) ;
1.2 un dispositif permettant la surveillance d'état de fonctionnement ;
1.3 un indicateur d'état de fonctionnement (280) du dispositif permettant la surveillance d'état de fonctionnement, disposé à l'intérieur du boîtier (100), derrière l'ouverture formant fenêtre (120) ;
1.4 comportant une interface (270) permettant la sortie de données concernant l'état de fonctionnement ; dans lequel le régulateur de position de soupape (210) est **caractérisé par** les caractéristiques suivantes :
1.5 un adaptateur (200) pour une transmission de données sans fil, en particulier selon la norme « Bluetooth Low Energy », dans lequel l'adaptateur (200) présente ce qui suit :
1.5.1 un boîtier cylindrique (300) dont le rayon est au moins deux fois, et au plus dix fois, supérieur à sa hauteur ;
1.5.2 un dispositif émetteur-récepteur sans fil ;
1.5.3 un processeur disposé dans le boîtier cylindrique et connecté au dispositif émetteur-récepteur sans fil ; et
1.5.4 une interface de données connectée au processeur ;
1.5.5 dans lequel le processeur est configuré pour commander le dispositif émetteur-récepteur et l'interface de données et peut transmettre des données sans fil à l'aide de ceux-ci ;
dans lequel
1.5.6 le boîtier cylindrique (300) présente un dispositif de signalisation optique (140, 150) sur un côté opposé au processeur ;
1.6.1 dans lequel l'adaptateur (200) est connecté à l'interface (270) afin de recevoir des données concernant l'état de fonctionnement par l'intermédiaire de l'interface et afin de commander le dispositif de signalisation optique en réponse à la réception desdites données pour la distribution d'un signal optique prédéfini ; et
1.6.2 dans lequel l'adaptateur (200) est positionné entre l'indicateur d'état de fonctionnement (280) et l'ouverture formant fenêtre (120) dans une position qui permet une inspection du dispositif de signalisation à travers l'ouverture formant fenêtre (120).

2. Régulateur de position de soupape (210) selon la revendication précédente,
**caractérisé en ce**
**que** le rayon du boîtier cylindrique (300) de l'adaptateur (200) est au moins trois fois supérieur à sa hauteur.

3. Régulateur de position de soupape (210) selon l'une des revendications précédentes,
**caractérisé en ce**
**que** le boîtier cylindrique (300) de l'adaptateur (200) présente une pluralité de dents (230) faisant saillie vers l'extérieur.

4. Régulateur de position de soupape (210) selon l'une des revendications précédentes,
**caractérisé en ce**
**que** le processeur de l'adaptateur (200) est monté sur une carte de circuit imprimé (410) ;
**que** la carte de circuit imprimé est encapsulée avec un adhésif en polyamide sur le côté équipé du processeur ; et
**que** la carte de circuit imprimé (410) encapsulée forme le boîtier (300) de l'adaptateur (200).

5. Régulateur de position de soupape (210) selon l'une des revendications précédentes,
**caractérisé en ce**
**que** le boîtier (300) de l'adaptateur (200) présente un épaulement circonférentiel.

6. Régulateur de position de soupape (210) selon l'une des revendications précédentes,
**caractérisé en ce**
**que** le dispositif de signalisation optique est basé sur des cristaux liquides et/ou sur du papier électronique et/ou sur des diodes électroluminescentes.

7. Régulateur de position de soupape (210) selon la revendication immédiatement précédente,
**caractérisé en ce**
**que** le dispositif de signalisation optique présente deux diodes électroluminescentes (140, 150) de couleurs différentes.

8. Régulateur de position de soupape (210) selon la revendication immédiatement précédente,
**caractérisé en ce**
**que** le dispositif de signalisation optique présente une diode électroluminescente rouge (140) et une diode électroluminescente verte (150).

9. Régulateur de position de soupape (210) selon la revendication immédiatement précédente, **caractérisé par**
un dispositif de commande configuré pour afficher des informations concernant l'état de fonctionnement du régulateur de position de soupape (210) à l'aide des diodes électroluminescentes rouge (140) et verte (150), conformément aux spécifications des codes NAMUR.

10. Régulateur de position de soupape (210) selon la revendication immédiatement précédente, **caractérisé en ce**
**que** des informations concernant l'état de fonctionnement du régulateur de position de soupape (210) sont affichées à l'aide des diodes électroluminescentes rouge (140) et verte (150) sous la forme suivante :
| Signal d'état | DEL |
|---|---|
| Défaillance | Rouge |
| Contrôle de fonctionnement | Rouge clignotant |
| Hors spécification | Rouge clignotant |
| Besoin d'entretien | Vert clignotant |
| Fonctionnement correct | Vert |

11. Système de traitement comportant au moins une soupape comportant un régulateur de position de soupape selon l'une des revendications 1 à 10.
